# EUROPEAN PATENT APPLICATION

(11) **EP 4 793 526 A1**
(43) Date of publication of application: **19.08.2026**
(21) Application number: 23956596.3
(22) Date of filing: 16.11.2023
(51) Int. Cl.: F16K 7/12, F16K 7/00

(54) **LIQUID LEVEL VALVE**

(30) Priority: 26.10.2023 CN 202311400059
(71) Applicant: Nanjing Hanshu Environmental Protection Equipment Co., Ltd, Nanjing, Jiangsu 211500 (CN); Liu, Guo, Nanjing, Jiangsu 211500 (CN)
(72) Inventor: LIU, Xiaohan, Nanjing, Jiangsu 211500 (CN); LIU, Guo, Nanjing, Jiangsu 211500 (CN)
(74) Representative: JD&P Patent Attorneys Joanna Dargiewicz & Partners
(86) International application number: PCT/CN2023/131900
(87) International publication number: WO 2025/086359

(57) **Abstract**

Disclosed is a liquid level valve, comprising a valve body, an active valve element, a passive valve element, a positioning magnet, a float mechanism, and a hydraulic mechanism. The float mechanism is disposed on an upper portion of the valve body, and the hydraulic mechanism is disposed at the bottom of the valve body. The float mechanism is used to drive the active valve element in response to a lower limit liquid level, and in turn drive the passive valve element to open a controlled port, thereby switching a switch apparatus to state B. The hydraulic mechanism is used to drive the active valve element in response to an upper limit liquid level, and in turn drive the passive valve element to close the controlled port, thereby switching the switch apparatus to state A.

## Description

### TECHNICAL FIELD

The present disclosure relates to a liquid level valve for controlling a liquid level.

### BACKGROUND

In the prior art, when a liquid is injected into a container, since a float valve performs opening and closing control in response to an upper liquid level, frequent start-up of a liquid supply system is inevitably caused. Furthermore, a switch signal is transmitted through a dry-reed liquid level switch having double liquid levels to drive a valve to open and close, thereby achieving measurement and control of the liquid level. However, two floats of the liquid level switch are sleeved on a long rod. During a process of the liquid level rising, due to large fluctuations of the liquid level, a center of gravity of the floats is prone to tilt, causing the floats to be stuck on the long rod. During a process of the liquid level falling, due to surface tension of the liquid, the center of gravity is also prone to tilt, causing the floats to be stuck on the long rod, thereby leading to malfunction of the liquid level measurement and control. In addition, a purely mechanically controlled float valve has a lower failure rate compared to devices that perform liquid level measurement and control through electronic components. Therefore, in practical applications, even when advanced liquid level sensors are used for measurement and control, a float valve is usually provided at a port of the container to ensure liquid level control safety. However, this makes the liquid level measurement and control mechanism bulky and complex. Furthermore, the liquid level switch with two floats sleeved on the long rod occupies a relatively large height dimension of the container, and the structure is not compact enough.

### SUMMARY

### Technical Problem

In view of the above technical problems existing in the prior art, the present disclosure provides a liquid level valve.

### Technical Solution

The liquid level valve includes:
a valve body internally provided with an active valve cavity vertically extending and a passive valve cavity, where a controlled port is arranged on the passive valve cavity;
an active valve core arranged in the active valve cavity, where the active valve core is movable along the active valve cavity, and the active valve core has a first position and a second position within a movement stroke;
a passive valve core arranged in the passive valve cavity, where the passive valve core is movable along the passive valve cavity, and the passive valve core is capable of opening and closing the controlled port through movement;
a magnetic component including an active magnet, a positioning magnet, and a magnetic actuating component respectively arranged on the active valve core, the valve body, and the passive valve core, where a magnetic interaction is formed among the active magnet, the positioning magnet, and the magnetic actuating component such that: the active valve core is maintained at the first position or the second position after movement thereto, and when the active valve core moves between the first position and the second position, the active valve core is capable of forcing the passive valve core to open and close the controlled port;
a float ball mechanism including a cage component and a trigger float arranged within the cage component, where the trigger float, under limitation of the cage component, has a high position floating to a top of the cage component and a low position moving down to a bottom of the cage component; a trigger magnet is arranged within the trigger float, when the trigger float descends to the low position, a magnetic attractive force is formed between the trigger magnet and the positioning magnet, and a magnetic repulsive force is formed between the trigger magnet and the active magnet; and during a process of the trigger float descending to the low position in response to a liquid level falling to a lower limit liquid level, the magnetic attractive force formed between the trigger magnet and the positioning magnet and the magnetic repulsive force formed between the trigger magnet and the active magnet force the active valve core to move from the second position to the first position; and
a hydraulic mechanism arranged at a bottom of the valve body, where the hydraulic mechanism includes a driving rod and a diaphragm, an upper end of the driving rod extends into the active valve cavity, the diaphragm is configured to respond to a pressure change of a liquid caused by a change of the liquid level; and during a process of the diaphragm deforming upward in response to the liquid level rising to an upper limit liquid level, the diaphragm drives the driving rod to force the active valve core to move from the first position to the second position, a magnetic interaction among the trigger magnet, the positioning magnet, and the active magnet changes, and a buoyancy force of the trigger float is at least capable of overcoming the changed magnetic interaction to float from the low position to the high position.

In some embodiments, the trigger float is configured as a spherical float, the trigger magnet is adjacent to a bottom of the trigger float, the trigger magnet is in a mirror-symmetrical arrangement, and an inner cavity of the cage component includes a cylindrical cavity portion and an arcuate cavity portion located above the cylindrical cavity portion.

In some embodiments, the arcuate cavity portion is a spherical cavity portion having a radial dimension larger than a radial dimension of the cylindrical cavity portion, so that a top of the inner cavity of the cage component forms a diffusing portion.

In some embodiments, the trigger float is configured as a cylindrical float, an inner cavity of the cage component is configured as a cylindrical cavity, a top of the cylindrical cavity is provided with a guide rod vertically arranged, a guide hole is formed along an axis of the trigger float, the guide rod passes through the guide hole, and the trigger magnet is adjacent to a bottom of the trigger float and is in a mirror-symmetrical arrangement.

In some embodiments, the active magnet is a single piece, the active magnet is adjacent to the positioning magnet and is configured to move between magnetic poles of two ends of the positioning magnet;
a magnetic interaction between the positioning magnet and the active magnet maintains the active valve core at the first position or the second position; and
the magnetic interaction among the active magnet, the positioning magnet, the magnetic actuating component causes the passive valve core to open and close the controlled port as the active valve core moves.

In some embodiments, the active magnet includes a first active magnet and a second active magnet, the first active magnet is adjacent to the positioning magnet and is configured to move between magnetic poles of two ends of the positioning magnet, the second active magnet is located below the first active magnet and is adjacent to the magnetic actuating component;
a magnetic interaction between the positioning magnet and the first active magnet maintains the active valve core at the first position or the second position; and
during a process of the active valve core moving upward to the second position, a magnetic interaction between the second active magnet and the magnetic actuating component causes the passive valve core to close the controlled port.

In some embodiments, the passive valve cavity extends horizontally, the passive valve core is movable horizontally along the passive valve cavity;
during the process of the active valve core moving upward to the second position, the second active magnet moves upward with the active valve core to approach the magnetic actuating component, a magnetic repulsive force is formed between the second active magnet and the magnetic actuating component, the passive valve core is forced to move horizontally outward in a direction away from the active valve cavity to close the controlled port through the formed magnetic repulsive force; and
during a process of the active valve core moving downward to the first position, the second active magnet moves downward with the active valve core away from the magnetic actuating component, and a magnetic attractive force applied by a magnetic pole of a lower end of the positioning magnet to the magnetic actuating component causes the passive valve core to move horizontally inward toward the active valve cavity to open the controlled port.

In some embodiments, the passive valve cavity extends vertically, and the passive valve core is movable vertically along the passive valve cavity;
a magnetic attractive force is formed between the second active magnet and the magnetic actuating component;
during a process of the active valve core moving downward to the first position, the magnetic attractive force between the second active magnet and the magnetic actuating component drives the passive valve core to move downward to open the controlled port; and
during the process of the active valve core moving upward to the second position, the magnetic attractive force between the second active magnet and the magnetic actuating component drives the passive valve core to move upward to close the controlled port.

In some embodiments, the passive valve cavity extends vertically, and the passive valve core is movable vertically along the passive valve cavity;
a return spring is arranged in the passive valve cavity;
a magnetic attractive force is formed between the second active magnet and the magnetic actuating component;
during a process of the active valve core moving downward to the first position, the magnetic attractive force between the second active magnet and the magnetic actuating component overcomes a spring force of the return spring to drive the passive valve core to move downward to open the controlled port; and
during the process of the active valve core moving upward to the second position, the return spring resets to drive the passive valve core to move upward to close the controlled port.

In some embodiments, the diaphragm is a bulging diaphragm, and a tension spring is sleeved on the driving rod.

In some embodiments, the diaphragm is a bulging diaphragm, a tension magnet is arranged on the driving rod, and a magnetic repulsive force is formed between the positioning magnet and the tension magnet.

In some embodiments, the positioning magnet has an annular structure, the active magnet has a bar-shaped structure, and the positioning magnet is located at a periphery of the active magnet.

In some embodiments, the active magnet is movable along a magnetic pole direction of the positioning magnet, the active magnet is maintained within a cavity defined by magnetic poles of two ends of the positioning magnet, and the active magnet includes a magnet formed as a permanent magnet or as a ferrous material magnetized by the positioning magnet.

In some embodiments, the active magnet has an annular structure, the positioning magnet has a bar-shaped structure, and the active magnet is located at a periphery of the positioning magnet.

In some embodiments, the active magnet is movable along a magnetic pole direction of the positioning magnet, and the positioning magnet is maintained within a cavity defined by magnetic poles of two ends of the active magnet, and the positioning magnet includes a magnet formed as a permanent magnet or as a ferrous material magnetized by the active magnet.

In some embodiments, the magnetic actuating component is a magnet or a ferrous component.

In some embodiments, the diaphragm is a flexible diaphragm, and the flexible diaphragm includes a bulging diaphragm.

In some embodiments, the diaphragm is a spring diaphragm.

In some embodiments, the hydraulic mechanism further includes a force-applying float; the force-applying float is arranged below the spring diaphragm, and the force-applying float is configured to apply an upward force to the spring diaphragm through buoyancy force; and
the spring diaphragm is configured to deform upward based on the buoyancy force of the force-applying float and a pressure of the liquid.

In some embodiments, an air containing cavity is formed in the valve body, and an air filter component is arranged in the air containing cavity.

### Advantageous Effects

The liquid level valve of the present disclosure utilizes the hydraulic mechanism to control the switch device to switch to the state A (a state of signal disconnection and/or valve closing) in response to the upper limit liquid level, and utilizes the float ball mechanism to control the switch device to switch to the state B (a state of signal conduction and/or valve opening) in response to the lower limit liquid level, thereby achieving the purpose of controlling the switch device to switch states based on the liquid level.

When the liquid level fluctuates or when the liquid level is tilted, compared with a float ball mechanism in which a float is sleeved on a tube, the trigger float in the float ball mechanism of the liquid level valve of the present disclosure has a lower probability of getting stuck.

The float ball mechanism of the liquid level valve of the present disclosure has a small volume and size and a compact structure.

Other key advantages of the present disclosure are directly and implicitly recorded in the detailed embodiments below.

It should be understood that the foregoing general description and the following detailed description are merely exemplary and explanatory and are not intended to limit the present disclosure.

The following is an overview of various implementations or examples of the technology described in the present disclosure, and is not a comprehensive disclosure of the full scope or all features of the disclosed technology.

### BRIEF DESCRIPTION OF THE DRAWINGS

In the drawings, which may not necessarily be drawn to scale, the same reference numerals may describe similar components in different views. The same reference signs having letter suffixes or different letter suffixes may represent different instances of similar components. The drawings generally illustrate various embodiments by way of example and not limitation, serve to explain the embodiments of the present disclosure. Where appropriate, the same reference signs are used throughout the drawings to refer to the same or like parts. Such embodiments are illustrative and are not intended to be exhaustive or exclusive embodiments of the device or method of the present disclosure.
FIG. 1A is a cross-sectional view of a liquid level valve having a first structure provided by the present disclosure (the active valve core being in a first position).
FIG. 1B is a cross-sectional view of the liquid level valve having the first structure provided by the present disclosure (the active valve core being in a second position).
FIG. 2A is a cross-sectional view of a liquid level valve having a second structure provided by the present disclosure (the active valve core being in a first position).
FIG. 2B is a cross-sectional view of the liquid level valve having the second structure provided by the present disclosure (the active valve core being in a second position).
FIG. 3A is a cross-sectional view of a liquid level valve having a third structure provided by the present disclosure (the active valve core being in a first position).
FIG. 3B is a cross-sectional view of the liquid level valve having the third structure provided by the present disclosure (the active valve core being in a second position).
FIG. 4A is a cross-sectional view of a liquid level valve having a fourth structure provided by the present disclosure (the active valve core being in a first position).
FIG. 4B is a cross-sectional view of the liquid level valve having the fourth structure provided by the present disclosure (the active valve core being in a second position).
FIG. 5 is a cross-sectional view of a liquid level valve having a fifth structure provided by the present disclosure (the active valve core being in a second position).
FIG. 6A is a cross-sectional view of a liquid level valve having a sixth structure provided by the present disclosure (the active valve core being in a first position).
FIG. 6B is a cross-sectional view of the liquid level valve having the sixth structure provided by the present disclosure (the active valve core being in a second position).

### Description of reference signs:

10 valve body; 11 active valve cavity; 12 passive valve cavity; 13 controlled port; 131 flow passage; 14 air containing cavity; 15 exhaust hole; 20 float ball mechanism; 21 cage component; 211 cylindrical cavity portion; 212 arcuate cavity portion; 213 first communication opening; 214 second communication opening; 215 cylindrical cavity; 216 guide rod; 22 trigger float; 23 trigger magnet; 30 hydraulic mechanism; 31 driving rod; 32 diaphragm; 321 bulging diaphragm; 322 spring diaphragm; 33 tension magnet; 34 tension spring; 35 force-applying float; 36 force-applying rod; 41 active valve core; 42 passive valve core; 51 active magnet; 511 first active magnet; 512 second active magnet; 52 positioning magnet; 53 magnetic actuating component; 531 passive magnet; 532 ferrous component.

### DETAILED DESCRIPTION OF THE EMBODIMENTS

In order to make the objectives, technical solutions, and advantages of the embodiments of the present disclosure clearer, the technical solutions of the embodiments of the present disclosure will be described clearly and completely below in conjunction with the drawings of the embodiments of the present disclosure. Apparently, the described embodiments are some, but not all, of the embodiments of the present disclosure. Based on the described embodiments of the present disclosure, all other embodiments obtained by a person of ordinary skill in the art without involving inventive effort fall within the scope of protection of the present disclosure.

Unless otherwise defined, technical terms or scientific terms used in the present disclosure shall have the usual meanings understood by a person having ordinary skill in the art to which the present disclosure pertains. The terms "first", "second", and similar words used in the present disclosure do not indicate any order, quantity, or importance, but are only used to distinguish different components. The words "include" or "contain" and similar words mean that an element or item appearing before the word covers the elements or items and their equivalents listed after the word, but do not exclude other elements or items. The words "connect" or "connected" and similar words are not limited to physical or mechanical connections, but may include electrical connections, whether direct or indirect. The terms "upper", "lower", "left", "right", etc., are only used to indicate relative positional relationships, and when the absolute position of the described object changes, the relative positional relationship may also change accordingly.

In order to keep the following description of the embodiments of the present disclosure clear and concise, detailed descriptions of known functions and known components are omitted in the present disclosure.

The present disclosure provides a liquid level valve, which is generally arranged at a bottom of a container. The liquid level valve controls opening and closing of a switch device in response to a height of a liquid level of a liquid in the container. Specifically, a flow passage 131 is established between the container and a liquid control port of the switch device, such that the flow passage 131 passes through the liquid level valve. A controlled port 13 is provided on the flow passage 131 in the liquid level valve. The liquid level valve closes the controlled port 13 in response to the liquid level rising to an upper limit liquid level, thereby closing the flow passage 131. At this time, the switch device switches to a state A (the state A is: a state of signal disconnection and/or valve closing) in response to the closing of the flow passage 131. The liquid level valve opens the controlled port 13 in response to the liquid level falling to a lower limit liquid level, thereby opening the flow passage 131. At this time, the switch device switches to a state B (the state B is: a state of signal conduction and/or valve opening) in response to the opening of the flow passage 131.

The switch device may be of multiple types. For example, the switch device may be a mechanical switch valve having a liquid control port. For another example, the switch device may be a signal switch having a liquid control port. For another example, the switch device may be a switch valve having a liquid control port and a diaphragm, specifically, for example, a diaphragm switch valve.

As shown in all the drawings in the accompanying description, the liquid level valve includes a valve body 10, an active valve core 41, a passive valve core 42, a magnetic component, a float ball mechanism 20, and a hydraulic mechanism 30.

The valve body 10 internally is provided with a vertically extending active valve cavity 11. The active valve core 41 is arranged in the active valve cavity 11, and the active valve core 41 is vertically movable along the active valve cavity 11. The active valve cavity 11 has a first position and a second position within a vertical movement stroke. The active valve core 41 is capable of moving from the first position to the second position by moving upward, and is capable of moving from the second position to the first position by moving downward.

The valve body 10 is also provided therein with a passive valve cavity 12. The controlled port 13 of the flow passage 131 is arranged at an end of the passive valve cavity 12 (alternatively, the controlled port 13 may also be arranged on a cavity wall of the passive valve cavity 12). The passive valve core 42 is arranged in the passive valve cavity 12, and the passive valve core 42 is movable along the passive valve cavity 12, so that the passive valve core 42 may open the controlled port 13 through movement and close the controlled port 13 through reverse movement. A state in which the passive valve core 42 opens the controlled port 13 may be referred to as a first state, and a state in which the passive valve core 42 closes the controlled port 13 may be referred to as a second state.

The passive valve cavity 12 may be a vertically extending valve cavity or a horizontally extending valve cavity. As such, the passive valve core 42 may open and close the controlled port 13 through vertical movement, and the passive valve core 42 may also open and close the controlled port 13 through horizontal movement.

The magnetic component includes: an active magnet 51, a positioning magnet 52, and a magnetic actuating component 53. The active magnet 51 is arranged on the active valve core 41. The positioning magnet 52 is arranged on the valve body 10. The magnetic actuating component 53 is arranged on the passive valve core 42. The magnetic actuating component 53 may be a magnet or may be a ferrous component 532 capable of forming a magnetic attractive force with a magnet. If a magnet serves as the magnetic actuating component 53, this magnetic actuating component 53 may be referred to as a passive magnet 531.

At least one active magnet 51 is arranged on the active valve core 41. That is, at least a first active magnet 511 is arranged on the active valve core 41. The positioning magnet 52 is arranged near a top of the valve body 10. The first active magnet 511 is adjacent to the positioning magnet 52. A magnetic pole direction of the positioning magnet 52 is the same as a magnetic pole direction of the first active magnet 511, both being vertical. Opposite magnetic poles of the positioning magnet 52 and the first active magnet 511 face the same direction. For example, an S pole of the positioning magnet 52 faces upward, and an N pole of the active magnet 51 faces upward. The positioning magnet 52 is formed by stacking two magnet units of equal length along a length direction with opposite magnetic poles facing each other. The first active magnet 511 includes one magnet unit, but is not limited to being constituted by one magnet unit. A length of the first active magnet 511 is equal to a length of one magnet unit of the positioning magnet 52.

It should be noted:
The magnetic pole direction refers to a direction indicated by an N pole and an S pole of a magnet. For example, for a magnet with an N pole pointing upward (or downward) and an S pole pointing downward (or upward), the magnetic pole direction of the magnet is vertical. Correspondingly, for a magnet with an N pole pointing left (or right) and an S pole pointing right (or left), the magnetic pole direction of the magnet is horizontal. Generally, two magnets having the same magnetic pole direction can be understood as the two magnets being arranged in parallel; two magnets having perpendicular magnetic pole directions can be understood as the two magnets being arranged perpendicularly; the length of a magnet can be understood as a dimension of the magnet in the magnetic pole direction, and a thickness of a magnet can be understood as a dimension of the magnet in a direction perpendicular to the magnetic pole direction.

Opposite magnetic poles facing the same direction means that the magnetic poles of different polarities of two magnets face the same direction. For example, if an N pole of one of the two magnets faces upward (or downward), and an S pole of the other magnet also faces upward (or downward), then it is said that the opposite magnetic poles of the two magnets face the same direction. Correspondingly, if an N pole of one of the two magnets faces upward and an N pole of the other magnet also faces upward, then it is said that the like magnetic poles of the two magnets face the same direction. Correspondingly, opposite magnetic poles of two magnets facing each other mentioned below means that the magnetic poles of different polarities of the two magnets face each other. For example, an N pole (or S pole) of one of the two magnets faces an S pole (or N pole) of the other magnet.

The magnetic interaction of the positioning magnet 52 and the first active magnet 511 having the above structure, magnetic pole arrangement, and positional relationship has the following characteristics:
When the active valve core 41 moves from the second position to the first position, the first active magnet 511 moves from a position opposite to an upper magnet unit of the positioning magnet 52 to a position opposite a lower magnet unit, and the positioning magnet 52 maintains the first active magnet 511 at the position opposite to the lower magnet unit, thereby maintaining the active valve core 41 at the first position after moving to the first position.

When the active valve core 41 moves from the first position to the second position, the first active magnet 511 moves from the position opposite to the lower magnet unit of the positioning magnet 52 to the position opposite to the upper magnet unit, and the positioning magnet 52 maintains the first active magnet 511 at the position opposite to the upper magnet unit, thereby maintaining the active valve core 41 at the second position after moving to the second position.

The outer structures of the positioning magnet 52 and the first active magnet 511 may be various. For example, both the positioning magnet 52 and the first active magnet 511 are bar-shaped magnets. For another example, the positioning magnet 52 is a bar-shaped magnet, the first active magnet 511 is an annular magnet, and the first active magnet 511 is arranged at a periphery of the positioning magnet 52. For another example, the positioning magnet 52 is an annular magnet, the first active magnet 511 is a bar-shaped magnet, and the positioning magnet 52 is arranged at a periphery of the first active magnet 511. The structure of an annular magnet cooperating with a bar-shaped magnet facilitates applying a more uniform magnetic force to a trigger magnet 23 in a trigger float ball described below.

The magnetic interaction among the magnetic actuating component 53, the positioning magnet 52, and the active magnet 51 (the active magnet 51 may have only the first active magnet 511, or the active magnet 51 may have both the first active magnet 511 and other magnets) configures the active valve core 41 and the passive valve core 42 into the following relationship:
During a process of the active valve core 41 moving downward to the first position, the magnetic interaction of the positioning magnet 52 and the active magnet 51 with the magnetic actuating component 53 causes the passive valve core 42 to switch from the second state to the first state. During a process of the active valve core 41 moving upward to the second position, the magnetic interaction of the positioning magnet 52 and the active magnet 51 with the magnetic actuating component 53 causes the passive valve core 42 to switch from the first state to the second state.

The float ball mechanism 20 is arranged at the upper portion of the valve body 10. The float ball mechanism 20 includes a cage component 21 and a trigger float 22 arranged in an inner cavity of the cage component 21. The trigger float 22 is vertically movable under limitation of the cage component 21. The cage component 21 is configured with a relatively small axial dimension, so that a vertical movement stroke of the trigger float 22 is smaller compared with a float in the relevant art. The cage component 21 is provided with a first communication opening 213 on at least a lower side wall thereof, and a second communication opening 214 on a top thereof. The two communication openings allow liquid to flow between an inside and an outside of the cage component 21, so that the trigger float 22 can move up and down as the liquid level in the container rises and falls. Furthermore, the trigger float 22 is limited by the bottom and the top of the cage component 21 and moves within a limited and small stroke. A position where the trigger float 22 moves down to the bottom of the cage component 21 may be referred to as a low position, and a position where the float moves up to the top of the cage component 21 may be referred to as a high position.

A trigger magnet 23 is arranged in the trigger float 22. Further, the trigger magnet 23 is located at the bottom of the trigger float 22. The trigger magnet 23 is substantially coaxially opposite to the positioning magnet 52 and the active magnet 51. A magnetic pole direction of the trigger magnet 23 is the same as the magnetic pole directions of the positioning magnet 52 and the first active magnet 511 of the active magnet 51. Opposite magnetic poles of the trigger magnet 23 and the positioning magnet 52 face each other, and like magnetic poles of the trigger magnet 23 and the first active magnet 511 face each other. When the trigger magnet 23 descends to the low position, a magnetic attractive force is formed between the trigger float 22 and the positioning magnet 52, and a magnetic repulsive force is formed between the trigger float 22 and the first active magnet 511. As such, during a process in which the trigger float 22 descends to the low position in response to the liquid level falling to the lower limit liquid level, the magnetic attractive force formed between the trigger magnet 23 and the positioning magnet 52 and the magnetic repulsive force formed between the trigger magnet 23 and the first active magnet 511 force the active valve core 41 to move from the second position to the first position, the passive valve core 42 is switched from the second state to the first state, the passive valve core 42 opens the controlled port 13, and the flow passage 131 is opened, thereby switching the switch device to the state B. It can be seen that when the liquid level in the container falls to the lower limit liquid level, the float ball mechanism 20 is configured for controlling the switch device to switch to the state B (the state of signal conduction and/or valve opening).

The hydraulic mechanism 30 is arranged at the bottom of the valve body 10. The hydraulic mechanism 30 includes a driving rod 31 and a diaphragm 32. The upper end of the driving rod 31 extends into the active valve cavity 11. The diaphragm 32 is configured to respond to a pressure change of the liquid caused by a change of the liquid level, during a process in which the diaphragm 32 deforms upward in response to the liquid level rising to the upper limit liquid level, the diaphragm 32 drives the driving rod 31 to force the active valve core 41 to move from the first position to the second position, the passive valve core 42 is switched from the first state to the second state, the passive valve core 42 closes the controlled port 13, and the flow passage 131 is closed, thereby switching the switch device to the state A. It can be seen that when the liquid level in the container rises to the upper limit liquid level, the hydraulic mechanism 30 is configured for controlling the switch device to switch to the state A (the state of signal disconnection and/or valve closing). Before the active valve core 41 moves upward, the buoyancy force of the trigger float 22 overcomes the magnetic interaction among the trigger magnet 23, the positioning magnet 52, and the active magnet 51 to float upward, or during the process of the active valve core 41 moving from the first position to the second position, or after the active valve core 41 moves upward to the second position, the magnetic interaction among the trigger magnet 23, the positioning magnet 52, and the active magnet 51 changes, and the buoyancy force of the trigger float 22 overcomes the changed magnetic interaction to float from the low position to the high position.

It should be noted:
The trigger magnet 23 may include one magnet unit, or the trigger magnet 23 may be integrated by two or more magnet units. When the trigger magnet 23 is integrated by two or more magnet units, the structure of the integrated magnet units is configured such that: a region corresponding to the positioning magnet 52 forms a magnetic attractive force therebetween, and a region corresponding to the active magnet 51 (specifically the first active magnet 511) forms a magnetic repulsive force therebetween. For example, the trigger magnet 23 may be formed by nesting an annular magnet unit and a bar-shaped magnet unit with like magnetic poles facing the same direction. The trigger magnet 23 may also be formed by integrating multiple bar-shaped magnet units surrounding one bar-shaped magnet unit, with like magnetic poles facing the same direction and evenly distributed. Thus, through different combinations of the magnet units, the trigger magnet 23 has different magnetic interaction intensities established with the positioning magnet 52 and the first active magnet 511.

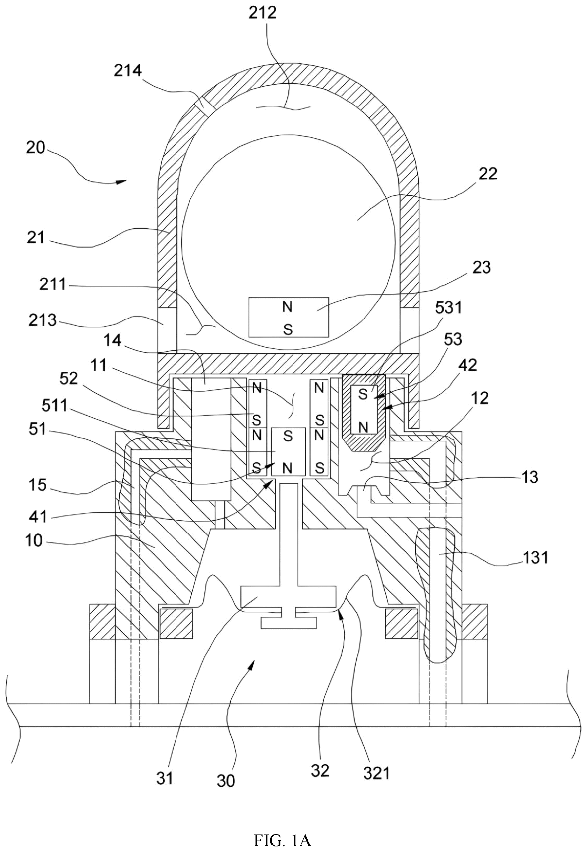

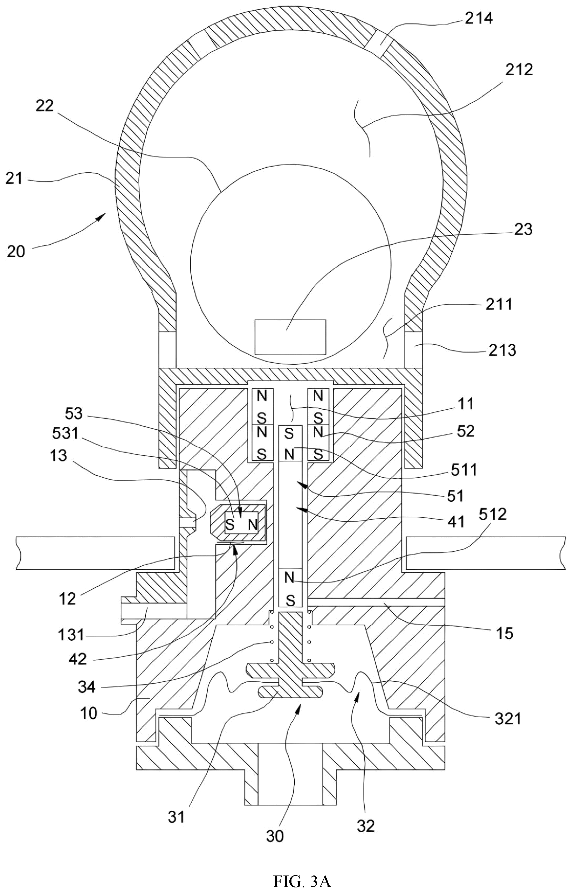

The active magnet 51 (the first active magnet 511) may be integrated by one or more permanent magnet units, or may be an active magnet 51 formed by a ferrous material magnetized by the positioning magnet 52. As shown in FIG. 1A and FIG. 3A, the active magnet 51 (the first active magnet 511) is maintained within a cylindrical cavity defined by the positioning magnet 52. When the first active magnet 511 is a ferrous material, since the ferrous material as a whole is affected by a magnetic field of the positioning magnet 52, two ends of the ferrous material are magnetized to become magnets having the same direction of opposite magnetic poles as the positioning magnet 52. Furthermore, the magnet formed by the magnetized ferrous material replaces a permanent magnet, i.e., serves as the first active magnet 511. Furthermore, when the ferrous material moves between the two magnetic poles of the positioning magnet 52, since a magnetic interaction intensity between opposite magnetic poles that are close to each other between the positioning magnet 52 and the ferrous material (the first active magnet 511) is greater than a magnetic interaction intensity between opposite magnetic poles that are far from each other, the ferrous material tends to be maintained at either end of the inner cavity defined by the two magnetic poles of the positioning magnet 52. Furthermore, a magnetic attractive force is formed between the trigger magnet 23 and the positioning magnet 52, and a magnetic repulsive force is formed between the trigger magnet 23 and the ferrous material (the first active magnet 511).

Of course, when a magnetized ferrous material is fixed as the positioning magnet (bar-shaped structure), and an annular active magnet moves along a magnetic pole direction of the positioning magnet formed by the magnetized ferrous material, and the two magnetic poles of the magnetized positioning magnet are maintained within a cavity defined by two magnetic poles of the active magnet, the same effect as above is achieved, such as cost reduction.

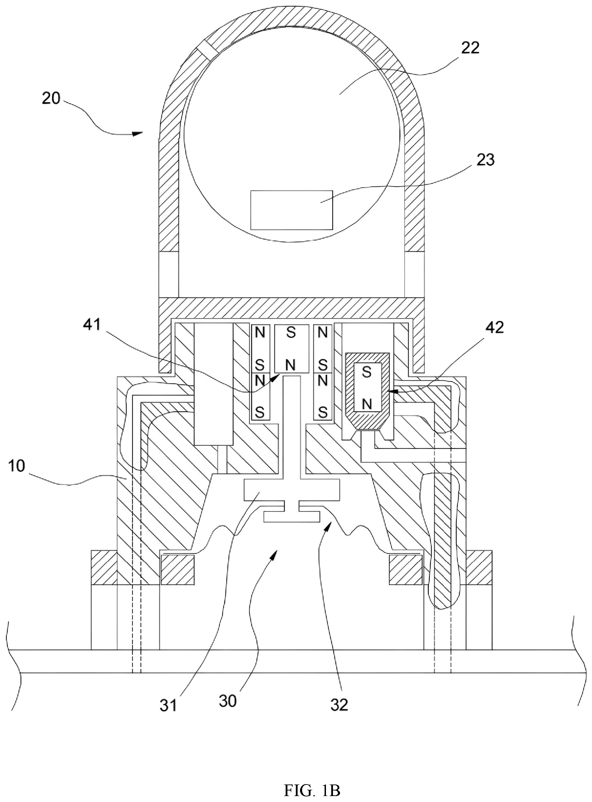

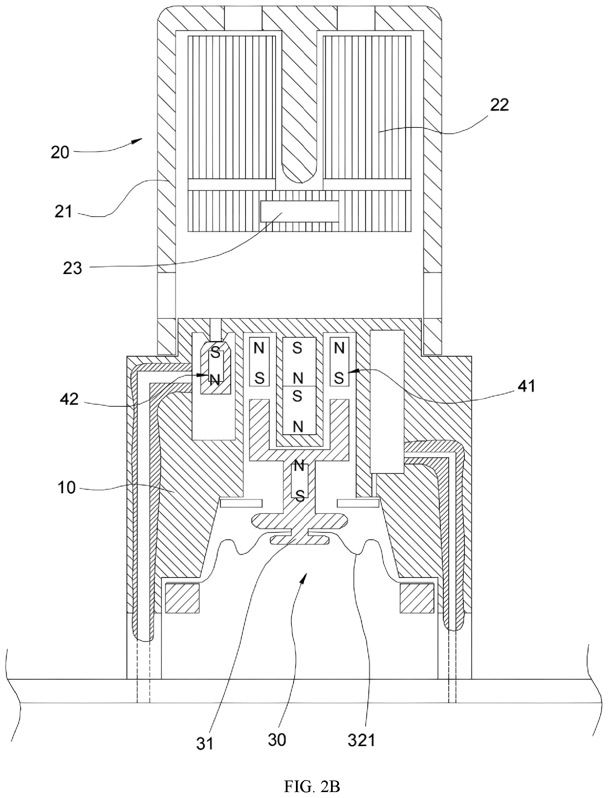

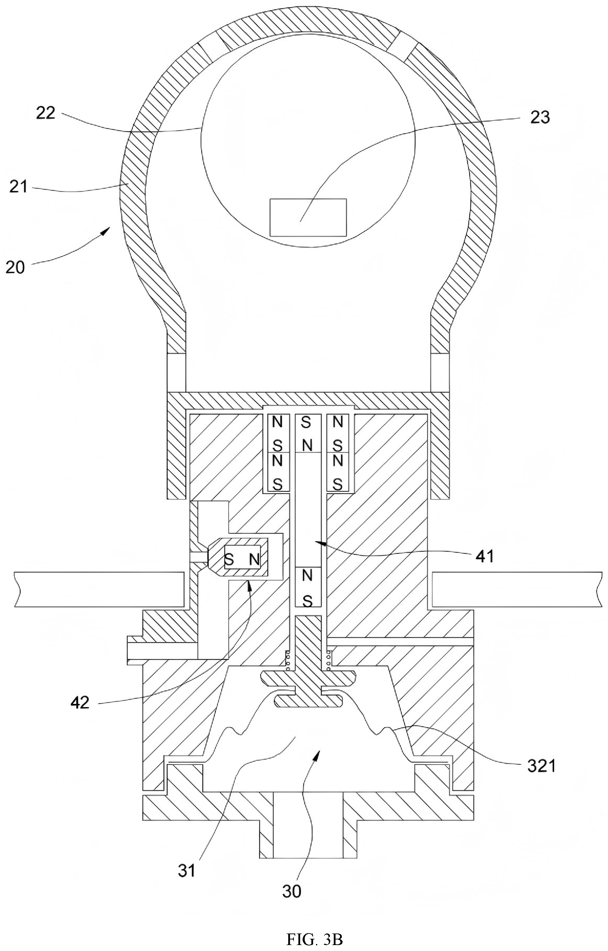

The driving rod 31 may drive the active valve core 41 in the following two ways:
A first driving manner: As shown in FIG. 1B and FIG. 3B, the driving rod 31 drives the active valve core 41 through a full stroke. That is, the driving rod 31 pushes the active valve core 41 from the first position to the second position by always abutting against the active valve core 41.
A second driving manner: As shown in FIG. 2B, the driving rod 31 drives the active valve core 41 through more than half of a stroke. That is, the driving rod 31 is responsible for pushing the active valve core 41 through more than half of the stroke by abutting against the active valve core 41, and then the active valve core 41 automatically moves to the second position by relying on the magnetic interaction force between the positioning magnet 52 and the first active magnet 511.

The advantages of the above liquid level valve provided by the present disclosure are:
The liquid level valve of the present disclosure utilizes the hydraulic mechanism 30 to control the switch device to switch to the state A (the state of signal disconnection and/or valve closing) in response to the upper limit liquid level, and utilizes the float ball mechanism 20 to control the switch device to switch to the state B (the state of signal conduction and/or valve opening) in response to the lower limit liquid level, thereby achieving the purpose of controlling the switch device to switch states based on the liquid level.

When the liquid level fluctuates or when the liquid level is tilted, compared with a float ball mechanism 20 in which a float is sleeved on a tube, the trigger float 22 in the float ball mechanism 20 of the liquid level valve of the present disclosure has a lower probability of getting stuck.

Since the trigger float 22 is confined in the cage component 21, a movement stroke of the trigger float 22 is limited. In combination with gravity of the trigger magnet 23 in the trigger float 22, a sticking phenomenon caused by a shift of a center of gravity of the trigger float 22 due to liquid level fluctuations and/or surface tension of the liquid during the rising and falling processes of the liquid level can be eliminated.

The trigger float 22 subjected to buoyancy force is not used for a closing action of the valve core, but indirectly opens the passive valve core 42 through the magnetic interaction among the trigger magnet 23, the positioning magnet 52, and the active magnet 51, i.e., the trigger float 22 is only used for opening the liquid level valve, there is no problem of the liquid level valve failing to close due to the trigger float 22 being stuck.

As the liquid level rises or falls, the hydraulic pressure also linearly rises or falls, so that the hydraulic pressure acting on the diaphragm 32 changes linearly, causing the diaphragm 32 to deform under pressure smoothly, and the valve core has a longer service life.

After the active valve core 41 moves to the second position, since it is pushed against by the driving rod 31 to force the passive valve core 42 to close the controlled port 13, even if the trigger magnet 23 remains in position unchanged, the controlled port 13 remains closed. Thus, the opening and closing control of the liquid level valve is safer and more reliable.

Compared with a float ball mechanism in which a float is sleeved on a tube, the float ball mechanism 20 of the liquid level valve of the present disclosure has a smaller volume and size and a more compact structure.

Since the trigger float 22 is confined in the cage component 21, the trigger float 22 only needs to move a small stroke to indirectly control the state switching of the switch device.

The present disclosure provides two structures of the float ball mechanism 20 as follows.

### A first structure of the float ball mechanism 20

The trigger float 22 is configured as a spherical float. The trigger magnet 23 is adjacent to the bottom of the trigger float 22, and the trigger magnet 23 is in a mirror-symmetrical arrangement. The inner cavity of the cage component 21 includes a cylindrical cavity portion 211 and an arcuate cavity portion 212 located above the cylindrical cavity portion 211. Further, the arcuate cavity portion 212 is a spherical cavity portion having a radial dimension larger than a radial dimension of the cylindrical cavity portion 211, so that the top of the inner cavity of the cage component 21 forms a diffusing portion.

Advantages of the first structure of the float ball mechanism 20 are as follows.

Since the trigger float 22 subjected to the buoyancy force is not used for a closing action of the valve core, the trigger float 22 can be made sufficiently small.

The spherical trigger float 22, when subjected to buoyancy force, is more conducive to self-adjustment of its center of gravity, thereby avoiding sticking.

The trigger magnet 23 provided in the trigger float 22 can overcome sticking of a cavity wall and an influence of surface tension of the liquid. Therefore, a material of the trigger float 22 can be very light.

When the liquid level fluctuates and/or tilts, the trigger float 22 is constrained by the diffusing portion of the inner cavity of the cage component 21, so that the trigger float 22 is protected from being affected by magnetic forces causing misoperation of the valve core.

### A second structure of the float ball mechanism 20

The trigger float 22 is configured as a cylindrical float. The inner cavity of the cage component 21 is configured as a cylindrical cavity 215. A top of the cylindrical cavity 215 is provided with a vertically arranged guide rod 216. The trigger float 22 defines a guide hole vertically extending along an axis thereof. The guide rod 216 passes through the guide hole. The trigger magnet 23 is adjacent to the bottom of the trigger float 22, and the trigger magnet 23 is in a mirror-symmetrical arrangement.

Advantages of the second structure of the float ball mechanism 20 are as follows.

Since the trigger float 22 subjected to the buoyancy force is not used for a closing action of the valve core, the trigger float 22 can be made sufficiently small.

A bottom horizontal end surface of the cylindrical trigger float 22 facilitates establishing a stronger magnetic attractive force between the trigger magnet 23 and the positioning magnet 52; and makes the magnetic interaction among the trigger magnet 23, the positioning magnet 52, and the active magnet 51 more significant.

Axial positioning of the trigger float 22 is achieved by the guide rod 216 passing through the guide hole, thereby avoiding a sticking phenomenon between the trigger float 22 and the inner cavity wall of the cage component 21 due to a downward center of gravity of the trigger float 22 when the liquid level tilts significantly.

The trigger float 22, the guide hole, and the trigger magnet 23 are coaxial, and the axis of the trigger float 22 is a center of gravity line, so that a frictional resistance when the trigger float 22 moves vertically along the guide rod 216 is small. Moreover, due to the short movement stroke, a probability of the trigger float 22 getting stuck when floating is extremely low. When the liquid level falls, since the axis of the trigger float 22 coincides with the center of gravity line, the trigger float 22 can easily overcome an influence of surface tension of the liquid, avoiding a sticking phenomenon. Therefore, the material of the trigger float 22 can be very light.

The present disclosure provides two arrangements of the liquid level valve relative to the container. In different arrangements, a combination and an arrangement of the active magnet 51 are different, arrangements of the passive valve core 42 and the active valve core 41 are different, and magnetic interactions among the active magnet 51, the positioning magnet 52, and the passive magnet 531 are different.

### A first arrangement of the liquid level valve

The liquid level valve is entirely located in the container. That is, the float ball mechanism 20, the valve body 10, and the hydraulic mechanism 30 are all located in the container.

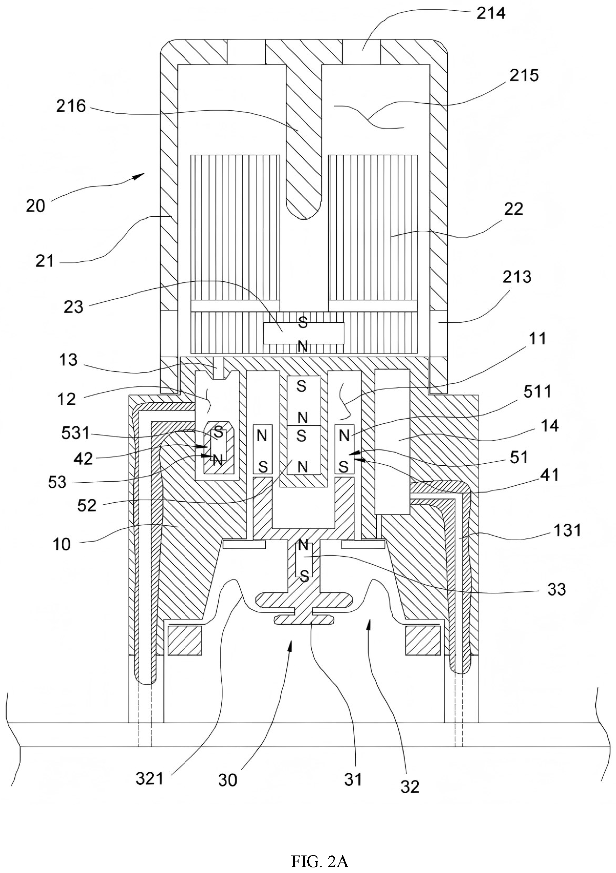

As shown in FIG. 1A, FIG. 1B, FIG. 2A, and FIG. 2B, the arrangement is as follows.

The active magnet 51 includes only one magnet, i.e., the first active magnet 511. The relative positional relationship and the magnetic pole directions of the first active magnet 511 and the positioning magnet 52 have been described in detail above.

The passive valve cavity 12 is located at one side of the active valve cavity 11, and an extending direction of the passive valve cavity 12 is the same as that of the active valve cavity 11. That is, the passive valve cavity 12 extends vertically, so that the passive valve core 42 may open or close the controlled port 13 through vertical movement.

The magnetic actuating component 53 is the passive magnet 531. A magnetic pole direction of the passive magnet 531 is the same as that of the positioning magnet 52.

During a process in which the active valve core 41 moves between the first position and the second position, a change in the position of the first active magnet 511 forces a change in the magnetic interaction among the positioning magnet 52, the first active magnet 511, and the passive magnet 531, thereby forcing the passive magnet 531 to move to close and open the controlled port 13.

In the first arrangement of the liquid level valve, the present disclosure provides two specific arrangements of the positioning magnet 52 and the first active magnet 511.

### A first specific arrangement:

As shown in FIG. 1A and FIG. 1B, the positioning magnet 52 is configured as an annular magnet, the first active magnet 511 is configured as a bar-shaped magnet, the positioning magnet 52 is located at a periphery of the active magnet 51, and opposite magnetic poles of the passive magnet 531 and the positioning magnet 52 face the same direction; the passive valve core 42 is located at one side of the positioning magnet 52; the controlled port 13 is arranged at a lower end of the passive valve cavity 12.

As shown in FIG. 1A, during the process in which the active valve core 41 moves downward from the second position to the first position, the change in the position of the first active magnet 511 causes a change in the magnetic interaction of the first active magnet 511 and the positioning magnet 52 with the passive magnet 531, thereby forcing the passive valve core 42 to switch upward from the second state to the first state, and the controlled port 13 is opened.

As shown in FIG. 1B, during the process in which the active valve core 41 moves upward from the first position to the second position, the change in the position of the first active magnet 511 causes the magnetic interaction of the first active magnet 511 and the positioning magnet 52 with the passive magnet 531 to change again, thereby forcing the passive valve core 42 to switch downward from the first state to the second state, and the controlled port 13 is closed.

In this specific arrangement: the passive valve core 42 moves between the first state and the second state by means of the change in the magnetic interaction among the first active magnet 511, the positioning magnet 52, and the passive magnet 531.

### A second specific arrangement:

As shown in FIG. 2A and FIG. 2B, the positioning magnet 52 is configured as a bar-shaped magnet, the first active magnet 511 is configured as an annular magnet, the first active magnet 511 is located at a periphery of the positioning magnet 52, and opposite magnetic poles of the passive magnet 531 and the first active magnet 511 face the same direction; a length of the passive magnet 531 is slightly smaller than that of the first active magnet 511. The passive valve core 42 is located at one side of the first active magnet 511, and the controlled port 13 is arranged at an upper end of the passive valve cavity 12.

As shown in FIG. 2A, during a process in which the active valve core 41 moves downward from the second position to the first position, the first active magnet 511 directly drives the passive valve core 42 to switch downward from the second state to the first state through a magnetic attractive force formed between the passive magnet 531 and first active magnet 511, and the controlled port 13 is opened.

As shown in FIG. 2B, during a process in which the active valve core 41 moves upward from the first position to the second position, the first active magnet 511 directly drives the passive valve core 42 to switch upward from the first state to the second state through the magnetic attractive force formed with the passive magnet 531, and the controlled port 13 is closed.

In this specific arrangement, the first active magnet 511 directly drives the passive valve core 42 to switch between the first state and the second state by forming the magnetic attractive force with the passive magnet 531.

### A second arrangement of the liquid level valve

The float ball mechanism 20 of the liquid level valve is located in the container, and a lower portion of the valve body 10 and the hydraulic mechanism 30 are both located below the bottom of the container, away from a liquid environment. In this arrangement, a port below the diaphragm 32 is in communication with the container via a pipeline for introducing the liquid from the container.

### In the second arrangement:

As shown in FIG. 3A, FIG. 3B, FIG. 4A, FIG. 4B, and FIG. 5, the active magnet 51 includes, in addition to the first active magnet 511, a second active magnet 512. The second active magnet 512 is located below the first active magnet 511 and is relatively far from the first active magnet 511 and the positioning magnet 52.

The passive valve cavity 12 is located below the positioning magnet 52 and the first active magnet 511.

In the first arrangement of the liquid level valve, the first active magnet 511 both participates in maintaining the position of the active valve core 41 and participates in driving the passive valve core 42.

In the second arrangement, the first active magnet 511 mainly participates in maintaining the position of the active valve core 41, and the second active magnet 512 mainly participates in driving the passive valve core 42.

In the second arrangement of the liquid level valve, the present disclosure provides two specific arrangements of the second active magnet 512 and the passive magnet 531. In these two arrangements, the second active magnet 512 both participates in driving the passive valve core 42. The difference is that the manner of participating in driving the passive valve core 42 is different.

A first specific arrangement of the second arrangement of the liquid level valve is as follows.

As shown in FIG. 3A and FIG. 3B, the passive valve cavity 12 extends horizontally, so that the passive valve core 42 is horizontally movable along the passive valve cavity 12, and the controlled port 13 is located on a horizontally outer side of the passive valve core 42 (i.e., a side away from the active valve cavity 11).The second active magnet 512 is located below the passive valve core 42, and a magnetic pole direction of the second active magnet 512 is perpendicular to a magnetic pole direction of the passive magnet 531, a polarity of a magnetic pole on a horizontally inner side (i.e., a side close to the active valve cavity 11) of the passive magnet 531 is the same as a polarity of an upper magnetic pole of the second active magnet 512, and is different from a polarity of a lower magnetic pole of the positioning magnet 52, so that a magnetic repulsive force is formed between the upper end of the second active magnet 512 and the passive magnet 531, and a magnetic attractive force is formed between the lower magnetic pole of the positioning magnet 52 and the passive magnet 531.

As shown in FIG. 3B, during the process in which the active valve core 41 moves upward from the first position to the second position, the second active magnet 512 moves upward to approach the passive magnet 531, and the magnetic repulsive force of the second active magnet 512 on the passive magnet 531 forces the passive valve core 42 to move horizontally outward to close the controlled port 13. During this process, the first active magnet 511 moves upward to a position opposite the upper magnet unit of the positioning magnet 52, and by means of the magnetic interaction between the first active magnet 511 and the positioning magnet 52, the active valve core 41 is maintained at the second position.

As shown in FIG. 3A, during a process in which the active valve core 41 moves downward from the second position to the first position, the second active magnet 512 moves downward away from the passive magnet 531, and the magnetic attractive force of the lower magnetic pole of the positioning magnet 52 on the passive magnet 531 causes the passive valve core 42 to move horizontally inward to open the controlled port 13. During this process, the first active magnet 511 moves downward to a position opposite to the lower magnet unit of the positioning magnet 52, and by means of the magnetic interaction between the first active magnet 511 and the positioning magnet 52, the active valve core 41 is maintained at the first position.

In this specific arrangement, the second active magnet 512 drives the passive valve core 42 to close the controlled port 13, and the positioning magnet 52 drives the passive valve core 42 to open the controlled port 13.

In this specific arrangement, when the active valve core 41 moves from the first position to the second position, the driving rod 31 of the hydraulic mechanism 30 needs to drive the active valve core 41 through a full stroke to overcome the magnetic repulsive force between the second active magnet 512 and the passive magnet 531.

A second specific arrangement of the second arrangement of the liquid level valve is as follows.

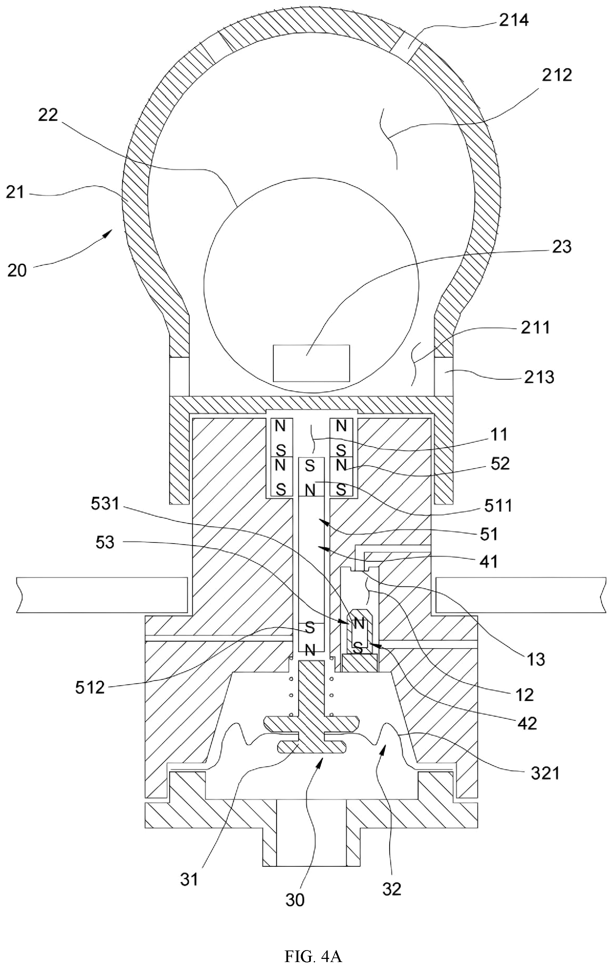

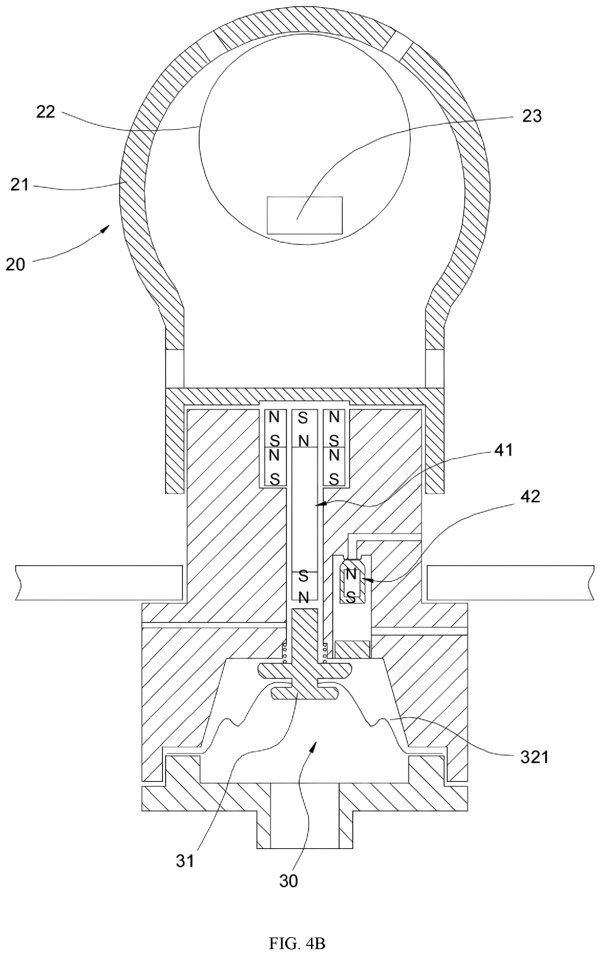

As shown in FIG. 4A and FIG. 4B, the passive valve cavity 12 extends vertically, so that the passive valve core 42 is vertically movable along the passive valve cavity 12, the controlled port 13 is located at an upper end of the passive valve cavity 12, the second active magnet 512 is located at one side of the passive valve cavity 12, a magnetic pole direction of the passive magnet 531 is the same as that of the second active magnet 512, and opposite magnetic poles of the passive magnet 531 and the second active magnet 512 face the same direction, whereby a magnetic attractive force is formed between the second active magnet 512 and the passive magnet, enabling the passive valve core 42 to move with the second active magnet 512.

As shown in FIG. 4B, during the process in which the active valve core 41 moves upward from the first position to the second position, the second active magnet 512 moves upward to drive the passive valve core 42 to move upward to close the controlled port 13. During this process, the first active magnet 511 moves upward to the position opposite the upper magnet unit of the positioning magnet 52, and by means of the magnetic interaction between the first active magnet 511 and the positioning magnet 52, the active valve core 41 is maintained at the second position.

As shown in FIG. 4A, during the process in which the active valve core 41 moves downward from the second position to the first position, the second active magnet 512 moves downward to drive the passive valve core 42 to move downward to open the controlled port 13. During this process, the first active magnet 511 moves downward to the position opposite the lower magnet unit of the positioning magnet 52, and by means of the magnetic interaction between the first active magnet 511 and the positioning magnet 52, the active valve core 41 is maintained at the first position.

In this specific arrangement, the second active magnet 512 both drives the passive valve core 42 to open the controlled port 13 and drives the passive valve core 42 to close the controlled port 13.

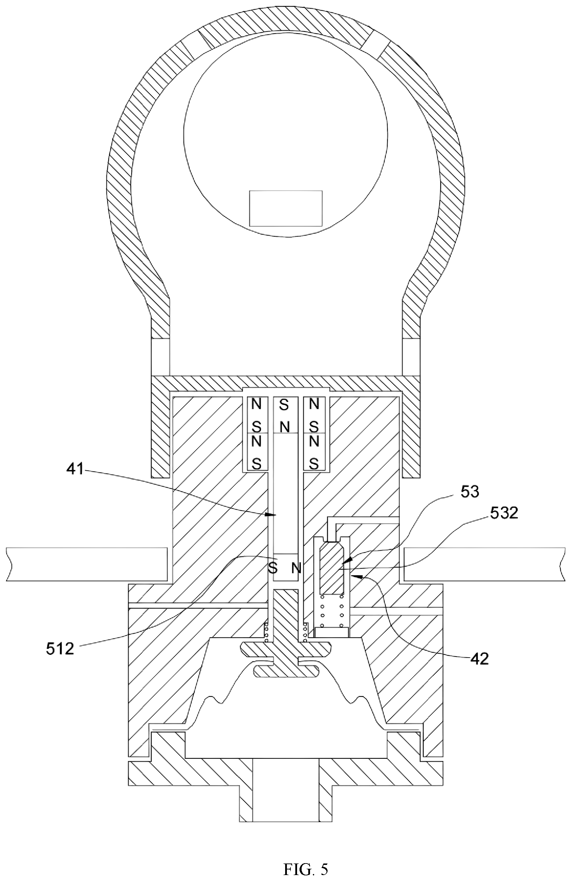

Based on the second specific arrangement, as shown in FIG. 5, the present disclosure modifies a magnetic pole arrangement direction of the second active magnet 512 and the magnetic actuating component 53 on the passive valve core 42. Specifically, the magnetic pole direction of the second active magnet 512 is configured to be horizontal, and the ferrous component 532 is used to replace the passive magnet 531 in the passive valve core 42, and a return spring is additionally provided in the passive valve cavity 12. During a process in which the active valve core 41 moves downward from the second position to the first position, the magnetic attractive force formed between the second active magnet 512 and the ferrous component 532 drives the passive valve core 42 to move downward to open the controlled port 13; and during a process in which the active valve core 41 moves upward from the first position to the second position, the return spring resets to drive the passive valve core 42 to move upward to close the controlled port 13. Therefore, in this improved structure, the second active magnet 512 is configured to drive the passive valve core 42 to open the controlled port 13, and the return spring is configured to drive the passive valve core 42 to close the controlled port 13.

Advantages of the above first arrangement of the liquid level valve are: the liquid level valve of the first arrangement is entirely installed in the container, which facilitates cooperation of the bottom of the container with other equipment, such as cooperation with a base. Advantages of the above second arrangement of the liquid level valve are: the second arrangement facilitates installation of the liquid level valve into the container from below the container.

In some embodiments, a height of the upper limit liquid level to which the hydraulic mechanism 30 responds is adjusted by configuring the trigger float 22 and the active valve core 41 to have different sequential actions.

When it is desired that the hydraulic mechanism 30 responds to a higher upper limit liquid level, the trigger float 22 is caused to float after the action of the active valve core 41. In this case, the active valve core 41 needs to overcome the magnetic interaction force between the first active magnet 511 and the positioning magnet 52, and the first active magnet 511 also needs to overcome the magnetic repulsive force between the first active magnet 511 and the trigger magnet 23. Therefore, a higher liquid pressure is required for the hydraulic mechanism 30 to act. Consequently, the hydraulic mechanism 30 would only act in response to a higher upper limit liquid level. In this case, when the driving rod 31 drives the active valve core 41, the driving rod 31 needs to drive the active valve core 41 through a full stroke. In this case, the trigger magnet 23 may be configured to have a relatively large magnetic attractive force with the positioning magnet 52 to ensure that the trigger float 22 is always at the low position before the active valve core 41 moves upward to the second position.

When it is desired that the hydraulic mechanism 30 responds to a lower upper limit liquid level, the trigger float 22 is caused to float before the action of the active valve core 41. In this case, during a process in which the liquid level rises to a lower upper limit liquid level, the trigger float 22 overcomes the magnetic attractive force between the trigger magnet 23 and the positioning magnet 52 to float first. The magnetic repulsive force between the trigger magnet 23 in the high position and the first active magnet 511 disappears, and the first active magnet 511 only needs to overcome the magnetic interaction force between the first active magnet 511 and the positioning magnet 52. Therefore, a lower liquid pressure is required for the hydraulic mechanism 30 to act. Consequently, the hydraulic mechanism 30 would act in response to a lower upper limit liquid level. In this case, when the driving rod 31 drives the active valve core 41, the driving rod 31 only needs to drive the active valve core 41 through more than half of a stroke, and the remaining stroke is completed by relying on the magnetic interaction force between the first active magnet 511 and the positioning magnet 52. In this case, a volume of the trigger float 22 may be set to be relatively large to ensure that the trigger float 22 has already floated to the high position away from the first active magnet 511 before the active valve core 41 moves upward.

In the present disclosure, the diaphragm 32 of the hydraulic mechanism 30 may be a relatively flexible bulging diaphragm 321. A deformation resistance of the bulging diaphragm 321 is relatively small, while a deformation amount thereof can be set to be relatively large. The diaphragm 32 may also be a spring diaphragm 322. A deformation resistance of the spring diaphragm 322 is relatively large, while a deformation amount thereof is relatively small.

In some embodiments, a tension component is provided on the hydraulic mechanism 30 using the bulging diaphragm 321 as the diaphragm 32. The tension component pushes the driving rod 31 downward to tension the bulging diaphragm 321, which is beneficial for maintaining a use effect and a service life of the bulging diaphragm 321. In addition, the tension component can also set a deformation timing of the diaphragm 32, thereby setting a working pressure of the liquid that causes the diaphragm 32 to deform, and further enabling setting of the upper limit liquid level.

The tension component may be a tension spring 34 or a tension magnet 33. As shown in FIG. 4A, when the tension spring 34 is used as the tension component, the tension spring 34 is sleeved on a trigger rod, and an upper end of the tension spring 34 abuts against the valve body 10, and the tension spring 34 pushes the driving rod 31 downward by a spring force to tension the bulging diaphragm 321. As shown in FIG. 2A, when the tension magnet 33 is used as the tension component, the tension magnet 33 is arranged in the driving rod 31, and the tension magnet 33 is configured to form a magnetic repulsive force with the positioning magnet 52, and the tension magnet 33 drives the driving rod 31 by means of the magnetic repulsive force formed with the positioning magnet 52 to tension the bulging diaphragm 321.

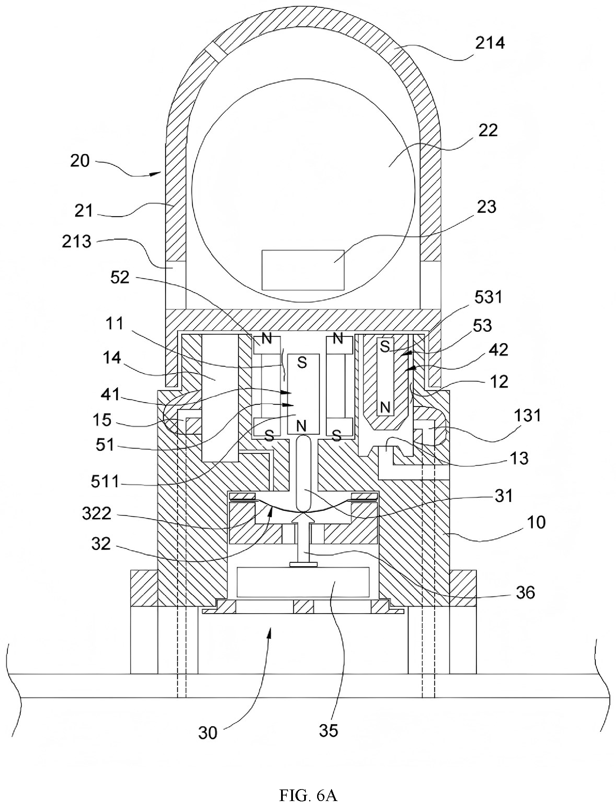

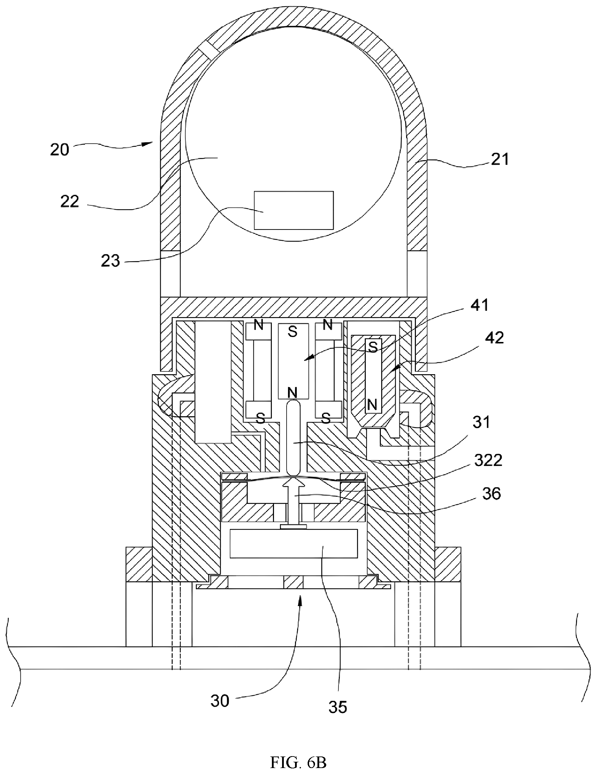

In a further embodiment, as shown in FIG. 6A and FIG. 6B, the spring diaphragm 322 is used as the diaphragm 32, and a force-applying float 35 is additionally provided below the spring diaphragm 322. To adapt to the feature of a relatively small deformation amount of the spring diaphragm 322, structures of the positioning magnet 52 and the active magnet 51 are adjusted.

Specifically, the force-applying float 35 is located below the spring diaphragm 322. A force-applying rod 36 is arranged between the force-applying float 35 and the spring diaphragm 322. A function of the force-applying float 35 is to apply an upward thrust to the spring diaphragm 322 through the force-applying rod 36 by using its own buoyancy force. Thus, the pressure of the liquid and the thrust of the force-applying float 35 on the spring diaphragm 322 force the spring diaphragm 322 to deform. Therefore, a deformation timing can be set by the spring diaphragm 322 and the force-applying float 35.

An arrangement of the positioning magnet 52 and the first active magnet 511 is as follows.

The positioning magnet 52 is formed by stacking three magnet units with opposite magnetic poles facing each other. A length of a middle magnet unit is greater than lengths of magnet units respectively arranged at two sides along an axis, and radially outer sides of the magnet units at the two sides protrude beyond a radially outer side of the middle magnet unit, and the two magnet units have equal lengths. The first active magnet 511 includes one magnet unit, but is not limited to being constituted by one magnet unit. A length of the magnet unit of the first active magnet 511 is equal to a sum of a length of the long magnet unit and a length of one short magnet unit in the positioning magnet 52.

As shown in FIG. 6A, during a process in which the trigger float 22 descends to the low position in response to the liquid level falling to the lower limit liquid level, the magnetic attractive force formed between the trigger magnet 23 and the positioning magnet 52 and the magnetic repulsive force formed between the trigger magnet 23 and the first active magnet 511 force the active valve core 41 to move from the second position to the first position. After moving to the first position, a lower end surface of the first active magnet 511 is substantially flush with a lower end surface of the positioning magnet 52. During this process, the change in the position of the first active magnet 511 causes a change in the magnetic interaction of the first active magnet 511 and the positioning magnet 52 with the passive magnet 531, thereby forcing the passive valve core 42 to move upward from the second state to the first state, and the controlled port 13 is opened.

As shown in FIG. 6B, when the liquid level rises to the upper limit liquid level, the upward thrust applied by the force-applying float 35 to the spring diaphragm 322 and the upward pressure applied by the liquid to the spring diaphragm 322 cause the spring diaphragm 322 to deform upward. The spring diaphragm 322 drives the driving rod 31 to force the active valve core 41 to move from the first position to the second position. After moving to the second position, an upper end surface of the first active magnet 511 is substantially flush with an upper end surface of the positioning magnet 52. During this process, the change in the position of the first active magnet 511 causes a change in the magnetic interaction of the first active magnet 511 and the positioning magnet 52 with the passive magnet 531, thereby forcing the passive valve core 42 to move downward from the first state to the second state, and the controlled port 13 is closed.

It can be seen from the above that the positioning magnet 52 and the first active magnet 511 of the above structure enable the active valve core 41 to move between the first position and the second position by only moving a distance equal to the length of a short magnet, thereby fitting the characteristic of the small deformation amount of the spring diaphragm 322.

It should be noted that:
When manufacturing the valve body 10, for example, when manufacturing the valve body 10 using a mold, process cavities such as grooves are formed in the valve body 10. By providing air holes between the process cavities and the valve cavities (and the chamber above the diaphragm 32), gas can enter the process cavities during operation. As such, the process cavities serve as an air containing cavity 14, and by providing an exhaust hole 15 between the air containing cavity 14 and an outside of the valve body 10 (e.g., a bottom), pressure between the outside and the air containing cavity 14 is balanced.

To prevent impurities from entering the various valve cavities inside the valve body 10 via the exhaust hole 15 and the air containing cavity 14, a gas filter component may be installed in the air containing cavity 14.

Furthermore, although exemplary embodiments have been described in the present disclosure, the scope thereof includes any and all embodiments based on the present disclosure having equivalent elements, modifications, omissions, combinations (e.g., cross-embodiment schemes), adaptations, or alterations. Elements in the claims will be broadly interpreted based on the language employed in the claims, and are not limited to examples described in this specification or during the implementation of the present disclosure, which examples are to be interpreted as non-exclusive. Therefore, this specification and examples are intended to be considered as examples only, with a true scope and spirit being indicated by the following claims and the full scope of equivalents thereof.

The above description is intended to be illustrative rather than restrictive. For example, the above examples (or one or more aspects thereof) may be used in combination with each other. For example, other embodiments may be used by a person of ordinary skill in the art upon reading the above description. Additionally, in the above detailed description, various features may be grouped together to streamline the present disclosure. This should not be interpreted as that an unclaimed disclosed feature is essential to any claim. Rather, the subject matter of the present disclosure may lie in less than all features of a particular disclosed embodiment. Thus, the following claims are hereby incorporated into the detailed description as examples or embodiments, with each claim standing on its own as a separate embodiment, and it is contemplated that these embodiments may be combined with each other in various combinations or permutations. The scope of the present disclosure should be determined with reference to the appended claims, along with the full scope of equivalents to which such claims are entitled.

The above embodiments are merely exemplary embodiments of the present disclosure and are not intended to limit the present disclosure. The protection scope of the present disclosure is defined by the claims. A person skilled in the art may make various modifications or equivalent substitutions within the spirit and protection scope of the present disclosure, and such modifications or equivalent substitutions shall also be deemed to fall within the protection scope of the present disclosure.

## Claims

1. A liquid level valve, comprising:
a valve body internally provided with an active valve cavity vertically extending and a passive valve cavity, wherein a controlled port is arranged on the passive valve cavity;
an active valve core arranged in the active valve cavity, wherein the active valve core is movable along the active valve cavity, and the active valve core has a first position and a second position within a movement stroke;
a passive valve core arranged in the passive valve cavity, wherein the passive valve core is movable along the passive valve cavity, and the passive valve core is capable of opening and closing the controlled port through movement;
a magnetic component comprising an active magnet, a positioning magnet, and a magnetic actuating component respectively arranged on the active valve core, the valve body, and the passive valve core, wherein a magnetic interaction is formed among the active magnet, the positioning magnet, and the magnetic actuating component such that: the active valve core is maintained at the first position or the second position after movement thereto, and when the active valve core moves between the first position and the second position, the active valve core is capable of forcing the passive valve core to open and close the controlled port;
a float ball mechanism comprising a cage component and a trigger float arranged within the cage component, wherein the trigger float, under limitation of the cage component, has a high position floating to a top of the cage component and a low position moving down to a bottom of the cage component; a trigger magnet is arranged within the trigger float, when the trigger float descends to the low position, a magnetic attractive force is formed between the trigger magnet and the positioning magnet, and a magnetic repulsive force is formed between the trigger magnet and the active magnet; and during a process of the trigger float descending to the low position in response to a liquid level falling to a lower limit liquid level, the magnetic attractive force formed between the trigger magnet and the positioning magnet and the magnetic repulsive force formed between the trigger magnet and the active magnet force the active valve core to move from the second position to the first position; and
a hydraulic mechanism arranged at a bottom of the valve body, wherein the hydraulic mechanism comprises a driving rod and a diaphragm, an upper end of the driving rod extends into the active valve cavity, the diaphragm is configured to respond to a pressure change of a liquid caused by a change of the liquid level; and during a process of the diaphragm deforming upward in response to the liquid level rising to an upper limit liquid level, the diaphragm drives the driving rod to force the active valve core to move from the first position to the second position, a magnetic interaction among the trigger magnet, the positioning magnet, and the active magnet changes, and a buoyancy force of the trigger float is at least capable of overcoming the changed magnetic interaction to float from the low position to the high position.

2. The liquid level valve according to claim 1, wherein the trigger float is configured as a spherical float, the trigger magnet is adjacent to a bottom of the trigger float, the trigger magnet is in a mirror-symmetrical arrangement, and an inner cavity of the cage component comprises a cylindrical cavity portion and an arcuate cavity portion located above the cylindrical cavity portion.

3. The liquid level valve according to claim 2, wherein the arcuate cavity portion is a spherical cavity portion having a radial dimension larger than a radial dimension of the cylindrical cavity portion, so that a top of the inner cavity of the cage component forms a diffusing portion.

4. The liquid level valve according to claim 1, wherein the trigger float is configured as a cylindrical float, an inner cavity of the cage component is configured as a cylindrical cavity, a top of the cylindrical cavity is provided with a guide rod vertically arranged, a guide hole is formed along an axis of the trigger float, the guide rod passes through the guide hole, and the trigger magnet is adjacent to a bottom of the trigger float and is in a mirror-symmetrical arrangement.

5. The liquid level valve according to claim 1, wherein the active magnet is a single piece, and the active magnet is adjacent to the positioning magnet and is configured to move between magnetic poles of two ends of the positioning magnet;
a magnetic interaction between the positioning magnet and the active magnet maintains the active valve core at the first position or the second position; and
the magnetic interaction among the active magnet, the positioning magnet, the magnetic actuating component causes the passive valve core to open and close the controlled port as the active valve core moves.

6. The liquid level valve according to claim 1, wherein the active magnet comprises a first active magnet and a second active magnet, the first active magnet is adjacent to the positioning magnet and is configured to move between magnetic poles of two ends of the positioning magnet, and the second active magnet is located below the first active magnet and is adjacent to the magnetic actuating component;
a magnetic interaction between the positioning magnet and the first active magnet maintains the active valve core at the first position or the second position; and
during a process of the active valve core moving upward to the second position, a magnetic interaction between the second active magnet and the magnetic actuating component causes the passive valve core to close the controlled port.

7. The liquid level valve according to claim 6, wherein the passive valve cavity extends horizontally, and the passive valve core is movable horizontally along the passive valve cavity;
during the process of the active valve core moving upward to the second position, the second active magnet moves upward with the active valve core to approach the magnetic actuating component, a magnetic repulsive force is formed between the second active magnet and the magnetic actuating component, and the passive valve core is forced to move horizontally outward in a direction away from the active valve cavity to close the controlled port through the formed magnetic repulsive force; and
during a process of the active valve core moving downward to the first position, the second active magnet moves downward with the active valve core away from the magnetic actuating component, and a magnetic attractive force applied by a magnetic pole of a lower end of the positioning magnet to the magnetic actuating component causes the passive valve core to move horizontally inward toward the active valve cavity to open the controlled port.

8. The liquid level valve according to claim 6, wherein the passive valve cavity extends vertically, and the passive valve core is movable vertically along the passive valve cavity;
a magnetic attractive force is formed between the second active magnet and the magnetic actuating component;
during a process of the active valve core moving downward to the first position, the magnetic attractive force between the second active magnet and the magnetic actuating component drives the passive valve core to move downward to open the controlled port; and
during the process of the active valve core moving upward to the second position, the magnetic attractive force between the second active magnet and the magnetic actuating component drives the passive valve core to move upward to close the controlled port.

9. The liquid level valve according to claim 6, wherein the passive valve cavity extends vertically, and the passive valve core is movable vertically along the passive valve cavity;
a return spring is arranged in the passive valve cavity;
a magnetic attractive force is formed between the second active magnet and the magnetic actuating component;
during a process of the active valve core moving downward to the first position, the magnetic attractive force between the second active magnet and the magnetic actuating component overcomes a spring force of the return spring to drive the passive valve core to move downward to open the controlled port; and
during the process of the active valve core moving upward to the second position, the return spring resets to drive the passive valve core to move upward to close the controlled port.

10. The liquid level valve according to claim 1, wherein the diaphragm is a bulging diaphragm, and a tension spring is sleeved on the driving rod.

11. The liquid level valve according to claim 1, wherein the diaphragm is a bulging diaphragm, a tension magnet is arranged on the driving rod, and a magnetic repulsive force is formed between the positioning magnet and the tension magnet.

12. The liquid level valve according to claim 1, wherein the positioning magnet has an annular structure, the active magnet has a bar-shaped structure, and the positioning magnet is located at a periphery of the active magnet.

13. The liquid level valve according to claim 12, wherein the active magnet is movable along a magnetic pole direction of the positioning magnet, the active magnet is maintained within a cavity defined by magnetic poles of two ends of the positioning magnet, and the active magnet comprises a magnet formed as a permanent magnet or as a ferrous material magnetized by the positioning magnet.

14. The liquid level valve according to claim 1, wherein the active magnet has an annular structure, the positioning magnet has a bar-shaped structure, and the active magnet is located at a periphery of the positioning magnet.

15. The liquid level valve according to claim 14, wherein the active magnet is movable along a magnetic pole direction of the positioning magnet, and the positioning magnet is maintained within a cavity defined by magnetic poles of two ends of the active magnet, and the positioning magnet comprises a magnet formed as a permanent magnet or as a ferrous material magnetized by the active magnet.

16. The liquid level valve according to claim 1, wherein the magnetic actuating component is a magnet or a ferrous component.

17. The liquid level valve according to claim 1, wherein the diaphragm is a flexible diaphragm, and the flexible diaphragm comprises a bulging diaphragm.

18. The liquid level valve according to claim 1, wherein the diaphragm is a spring diaphragm.

19. The liquid level valve according to claim 18, wherein the hydraulic mechanism further comprises a force-applying float, the force-applying float is arranged below the spring diaphragm, and the force-applying float is configured to apply an upward force to the spring diaphragm through buoyancy force; and
the spring diaphragm is configured to deform upward through the buoyancy force of the force-applying float and a pressure of the liquid.

20. The liquid level valve according to claim 1, wherein an air containing cavity is formed in the valve body, and an air filter component is arranged in the air containing cavity.
